# EUROPÄISCHE PATENTSCHRIFT

(11) **EP 3 131 194 B1**
(45) Veröffentlichungstag und Bekanntmachung des Hinweises auf die Patenterteilung: **24.04.2019**
(21) Anmeldenummer: 16183590.5
(22) Anmeldetag: 10.08.2016
(51) Int. Cl.: H02M 7/5387, H02M 7/48, H02M 1/00, H02M 1/34, H02M 1/42

(54) **WECHSELRICHTER MIT EINEM ENTLASTUNGSKONDENSATOR UND PHOTOVOLTAIKANLAGE UMFASSEND EINEN WECHSELRICHTER**
INVERTER WITH SNUBBER CAPACITOR AND PHOTOVOLTAIC PLANT COMPRISING AN INVERTER
ONDULEUR COMPRENANT UN CONDENSATEUR DE DECHARGE ET INSTALLATION PHOTOVOLTAÏQUE COMPRENANT UN ONDULEUR

(30) Priorität: 11.08.2015 DE 102015113247
(43) Veröffentlichungstag der Anmeldung: 15.02.2017
(73) Patentinhaber: SMA Solar Technology AG, 34266 Niestetal (DE)
(72) Erfinder: MONDZIK, Andrzej, 26-115 Skarzysko Koscielne (PL); PENCZEK, Adam, 30-127 Krakow (PL); RYLKO, Marek, 43-300 Bielsko-Biala (PL); STALA, Robert, 31-623 Krakow (PL); SZAREK, Milosz, 30074 Krakow (PL); SZOT, Slawomir, 38-400 Krosno (PL)
(74) Vertreter: Lahnor, Peter

(56) Entgegenhaltungen:
- DE-A1-102014 110 758
- FREDDY TAN KHENG SUAN ET AL: "Comparison and Analysis of Single-Phase Transformerless Grid-Connected PV Inverters", IEEE TRANSACTIONS ON POWER ELECTRONICS, INSTITUTE OF ELECTRICAL AND ELECTRONICS ENGINEERS, USA, Bd. 29, Nr. 10, Oktober 2014 (2014-10), Seiten 5358-5369, XP011550030, ISSN: 0885-8993, DOI: 10.1109/TPEL.2013.2294953 [gefunden am 2014-06-02]
- BO YANG ET AL: "Improved Transformerless Inverter With Common-Mode Leakage Current Elimination for a Photovoltaic Grid-Connected Power System", IEEE TRANSACTIONS ON POWER ELECTRONICS, INSTITUTE OF ELECTRICAL AND ELECTRONICS ENGINEERS, USA, Bd. 27, Nr. 2, Februar 2012 (2012-02), Seiten 752-762, XP011391785, ISSN: 0885-8993, DOI: 10.1109/TPEL.2011.2160359
- CAVALCANTI M C ET AL: "An improved quasi-square-wave DC-link converter", CONFERENCE RECORD OF THE 2002 IEEE INDUSTRY APPLICATIONS CONFERENCE : 37TH IAS ANNUAL MEETING ; 13 - 18 OCTOBER 2002, PITTSBURGH, PENNSYLVANIA, USA; [CONFERENCE RECORD OF THE IEEE INDUSTRY APPLICATIONS CONFERENCE. IAS ANNUAL MEETING], IEEE SERVICE CE, 13. Oktober 2002 (2002-10-13), Seite 2320, XP032143129, DOI: 10.1109/IAS.2002.1042770 ISBN: 978-0-7803-7420-1

## Beschreibung

Die Erfindung betrifft einen Wechselrichter, insbesondere einen photovoltaischen Wechselrichter, mit einem Entlastungskondensator. Weiterhin betrifft die Erfindung eine Photovoltaikanlage umfassend einen solchen Wechselrichter.

Wechselrichter werden insbesondere in photovoltaischen Anlagen zur Umwandlung einer von einem Photovoltaikgenerator bereitgestellten Gleichspannung in einen Wechselstrom verwendet, um den Wechselstrom in ein Wechselstromnetz einzuspeisen. Wünschenswert ist hierbei ein Betrieb des Wechselrichters mit bestmöglichem Wirkungsgrad, um Energieverluste zu vermeiden und den Aufwand zur Kühlung der Komponenten des Wechselrichters, insbesondere von Leistungshalbleiterschaltern des Wechselrichters, zu reduzieren.

Es ist beispielsweise von Resonanzwandlern bekannt, dass ein verlustarmes Schalten des Leistungshalbleiterschalters dadurch erreicht werden kann, dass der Schalter zu Zeitpunkten geschaltet wird, in denen der Schalter stromfrei oder spannungsfrei ist. Dies wird als sanftes Schalten bezeichnet.

Weiterhin ist die Verwendung eines Entlastungskondensators zur Realisierung eines sanften Schaltens bekannt. Hierbei hat beispielsweise zunächst zu Beginn des Ausschaltvorgangs die über dem Leistungshalbleiterschalter abfallende Spannung bedingt durch die jeweilige Anordnung und den Ladezustand des Entlastungskondensators einen Wert von null. Ferner kommutiert der Strom von dem Leistungshalbleiterschalter auf einen Pfad, in dem der Entlastungskondensator angeordnet ist, so dass trotz eines Spannungsanstiegs über dem Leistungshalbleiterschalter, welcher aus der sich durch den Stromfluss über den Entlastungskondensator ändernden Spannung über dem Entlastungskondensator resultiert, zu keinem Zeitpunkt des Ausschaltvorgangs das Produkt aus Spannung und Strom für den Leistungshalbleiterschalter eine mit Schaltverlusten korrespondierende Überhöhung aufzeigt.

Aus der Druckschrift DE 26 39 589 A1 ist eine Entlastungschaltung zur Ausschaltentlastung eines Leistungshalbleiterschalters bekannt, bei der ein Entlastungskondensator beim Einschalten des Leistungshalbleiterschalters durch eine Reihenschaltung einer Diode und einer Induktivität über einen Mittelabgriff einer geteilten Spannungsquelle auf die gleiche Spannung wie die Spannungsquelle aufgeladen wird. Beim Ausschalten des Leistungshalbleiterschalters wird der Entlastungskondensator über eine weitere Diode entladen und die in dem Entlastungskondensator gespeicherte Energie an die an den Leistungshalbleiterschalter angeschlossene Last abgegeben. Die Ausschaltentlastung erfolgt dadurch, dass einerseits zu Beginn des Ausschaltvorgangs der auf die gleiche Spannung wie die Spannungsquelle aufgeladene Kondensator eine Spannung von null über dem Leistungshalbleiterschalter bewirkt und andererseits der Strom durch den Leistungshalbleiterschalter auf den Pfad bestehend aus Entlastungskondensator und der weiteren Diode kommutiert. Die Druckschrift DE 26 39 589 A1 offenbart weiterhin einen aus einer Reihenschaltung zweier Leistungshalbleiterschalter in Form einer Halbbrücke gebildeten Zweig einer Wechselrichterschaltung. Hierbei ist für jeden der Leistungshalbleiterschalter jeweils ein Entlastungsnetzwerk der zuvor beschriebenen Form vorgesehen, wobei die Ladung der Entlastungskondensatoren über einen Mittelabgriff eines geteilten Gleichspannungszwischenkreises erfolgt, der zwischen Eingänge der Halbbrücke geschaltet ist. Die Druckschrift DE 26 39 589 A1 offenbart auch eine Wechselrichterschaltung in Form einer sogenannten H-Brücke, bei der für jeden der vier Leistungshalbleiterschalter jeweils ein Entlastungsnetzwerk der zuvor beschriebenen Form vorgesehen ist.

Die Druckschrift DE 42 19 644 A1 offenbart ebenfalls einen Wechselrichterzweig in Form einer Halbbrücke, bei der für jeden der Leistungshalbleiterschalter jeweils die zuvor beschriebene, aus der DE 26 39 589 A1 bekannte Schaltung zur Ausschaltentlastung vorgesehen ist. Zusätzlich weist der Wechselrichterzweig in der DE 42 19 644 A1 für jeden der Leistungshalbleiterschalter jeweils eine Schaltung zur Einschaltentlastung auf.

Die Druckschrift DE10 2010 008 426 B4 zeigt einen Wechselrichterzweig einer sogenannten NPC-Schaltung (Neutral Point Clamped), bei der der mit dem Mittelpunkt der Halbbrücke verbundene Ausgang des Wechselrichterzweigs über zusätzliche Schalter mit einem Neutralpotential verbunden werden kann, welches dem Mittelpunkt eines geteilten Gleichspannungszwischenkreises entspricht, der zwischen Eingänge der Halbbrücke geschaltet ist. Für jeden der Leistungshalbleiterschalter der Halbbrücke ist auch hier wieder jeweils die zuvor beschriebene, aus der DE 26 39 589 A1 bekannte Schaltung zur Ausschaltentlastung vorgesehen, die gleichzeitig auch zur Schaltentlastung der zusätzlichen Schalter beiträgt. Die Induktivitäten sind durch eine einzelne Induktivität realisiert, welche darüber hinaus auch zur Einschaltentlastung der Schalter beiträgt.

Die Druckschrift T. K. S. Freddy et al., "Comparison and Analysis of Single-Phase Transformerless Grid-Connected PV Inverters" IEEE Transactions on Power Electronics, vol. 29, no. 10, pp. 5358-5369, Oct. 2014, offenbart einen Wechselrichter umfassend eine Brückenschaltung mit einem ersten Brückeneingang und einem zweiten Brückeneingang, bei dem der erste Brückeneingang über einen aktiv ansteuerbaren Eingangsschalter mit einem ersten DC-Eingang verbunden ist. Zwischen dem ersten DC-Eingang und einem zweiten DC-Eingang ist ein geteilter Gleichspannungszwischenkreis angeordnet.

Ein Wechselrichter mit einer Brückenschaltung, die einen ersten Brückeneingang und einen zweiten Brückeneingang aufweist, wobei der erste Brückeneingang über einen aktiv ansteuerbaren Eingangsschalter mit einem DC-Eingang verbunden ist, ist auch aus der Druckschrift B. Yang et al., "Improved Transformerless Inverter With Common-Mode Leakage Current Elimination for a Photovoltaic Grid-Connected Power System" in IEEE Transactions on Power Electronics, vol. 27, no. 2, pp. 752-762, Feb. 2012 bekannt.

Die Druckschrift DE 10 2014 110 758 A1 offenbart einen Gleichspannungswandler mit einem Entlastungsnetzwerk für dessen Stellerschalter. Das Entlastungsnetzwerk umfasst einen Entlastungskondensator sowie einen Ladepfad und einen Entladepfad, wobei der Ladepfad derart eingerichtet ist, dass der Entlastungskondensator beim Einschalten des Stellerschalters aufgeladen wird. Beim Ausschalten des Stellerschalters wird der Entlastungskondensator entladen.

Es ist eine Aufgabe der vorliegenden Erfindung, einen Wechselrichter bereitzustellen, um eine Umwandlung einer Gleichspannung in Wechselstrom, insbesondere für eine Photovoltaikanlage, bei möglichst geringen Schaltverlusten und gleichzeitig möglichst geringem Aufwand zur Reduzierung der Schaltverluste zu realisieren.

Diese Aufgabe wird erfindungsgemäß gelöst durch einen Wechselrichter gemäß dem unabhängigen Anspruch 1 und durch eine Photovoltaikanlage gemäß dem nebengeordneten Vorrichtungsanspruch 13. Vorteilhafte Ausführungsformen der Erfindung sind in den abhängigen Ansprüchen wiedergegeben.

Ein erfindungsgemäßer Wechselrichter umfasst zunächst eine Brückenschaltung mit einem ersten Brückeneingang und einem zweiten Brückeneingang. Der erste Brückeneingang ist über einen aktiv ansteuerbaren Eingangsschalter mit einem ersten DC-Eingang verbunden. Ferner verbindet ein Entlastungskondensator den ersten Brückeneingang mit einem ersten Verbindungspunkt und eine Reihenschaltung einer ersten Diode und einer ersten Induktivität den ersten Verbindungspunkt mit einem Mittelabgriff eines zwischen dem ersten DC-Eingang und einem zweiten DC-Eingang angeordneten geteilten Gleichspannungszwischenkreises. Die erste Diode ist dabei derart gepolt, dass der Entlastungskondensator beim Einschalten des Eingangsschalters aufgeladen wird. Eine zweite Diode verbindet den ersten Verbindungspunkt mit dem zweiten DC-Eingang oder mit dem zweiten Brückeneingang, wobei die zweite Diode derart gepolt ist, dass der Entlastungskondensator beim Ausschalten des Eingangsschalters entladen wird.

Dadurch, dass bei geöffnetem Eingangsschalter der Entlastungskondensator entladen ist, liegt bei dem erfindungsgemäßen Wechselrichter zwischen dem ersten und zweiten Brückeneingang eine Spannung von null an. Bei Schaltvorgängen von innerhalb der Brückenschaltung vorhandenen Brückenschaltern kommutiert der Strom von dem jeweiligen Brückenschalter auf andere Brückenschalter oder auf in der Brückenschaltung gegebenenfalls vorhandene Freilaufdioden, wobei der Strom während des Kommutierungsvorgangs durch ausgangsseitig in der Brückenschaltung vorhandene Netzdrosseln begrenzt ist. Eine zu Beginn des Kommutierungsvorgangs von einem Strompfad innerhalb der Brückenschaltung auf einen anderen auftretende kurzzeitige Überspannung ist aufgrund der Spannung von null zwischen den Brückeneingängen nicht durch eine bereits anliegende Spannung erhöht, wodurch bei dem erfindungsgemäßen Wechselrichter eine Reduktion von Schaltverlusten der Brückenschalter erreicht wird. Der Entlastungskondensator dient somit zur Schaltentlastung der Brückenschalter.

Bei geöffnetem Eingangsschalter ist der erste Brückeneingang gleichzeitig auch von dem ersten DC-Eingang getrennt. Dies bedeutet, dass kein Leistungsfluss von den DC-Eingängen über den Wechselrichter zu AC-Ausgängen der Brückenschaltung mehr möglich ist. Der Eingangsschalter wird daher normalerweise nur zur Realisierung der zuvor beschriebenen Entlastung der Brückenschalter geöffnet, das heißt, bei hochfrequenter Taktung von Brückenschaltern sollte die Taktung des Eingangsschalters mit der gleichen Frequenz und synchron zur Taktung der Brückenschalter erfolgen, derart, dass der Eingangsschalter nur während Freilaufphasen geöffnet ist, während denen der durch die Netzdrosseln getriebene Strom in der Brückenschaltung über Freilaufpfade fließt. Andererseits kann die durch Öffnen des Eingangsschalters im Zuge der gewünschten Schaltentlastung auftretende Trennung des ersten Brückeneingangs von dem ersten DC-Eingang sogar vorteilhaft sein, insbesondere, wenn bei asymmetrischer Taktung der Brückenschalter gleichzeitig auch der zweite DC-Eingang von der Brückenschaltung entkoppelt wird. Durch die Entkopplung können dann Rückwirkungen von Schaltvorgängen innerhalb der Brückenschaltung auf die DC-Eingänge verhindert werden, welche beispielsweise bei Photovoltaikanlagen Ableitströme zur Folge haben können.

Bei geschlossenem Eingangsschalter wird der Entlastungskondensator über die Reihenschaltung der ersten Diode und der ersten Induktivität aus einer Hälfte des geteilten Zwischenkreises aufgeladen. Die Aufladung erfolgt dabei in Form einer halben Resonanzschwingung des aus Entlastungskondensator und erster Induktivität gebildeten Schwingkreises. Eine Fortsetzung der Resonanzschwingung, und somit ein sich der Aufladung anschließendes Entladen, wird durch die erste Diode verhindert. Am Entlastungskondensator liegt dadurch bei geschlossenem Eingangsschalter nach Abschluss der Aufladung, abgesehen von der an der ersten und zweiten Diode abfallenden vergleichsweise geringen Spannung, die gleiche Spannung an wie am Gleichspannungszwischenkreis.

Beim Öffnen des Eingangsschalters kommutiert der Strom auf einen Pfad über die Brückenschaltung, die zweite Diode und den Entlastungskondensator. Zu Beginn dieses Kommutierungsvorgangs liegt an dem Eingangsschalter aufgrund des auf die gleiche Spannung wie der Gleichspannungszwischenkreis aufgeladenen Entlastungskondensators eine Spannung von null an, wodurch keine überhöhte kurzzeitige Überspannung zu Beginn des Kommutierungsvorgangs auftreten kann. Der Entlastungskondensator dient also bei dem erfindungsgemäßen Wechselrichter nicht nur zur Reduzierung von Schaltverlusten der Brückenschalter, sondern auch zur Reduzierung von Schaltverlusten des aktiv ansteuerbaren Eingangsschalters, womit sich insgesamt trotz dieses zusätzlichen Schalters gegenüber einem konventionellen Wechselrichter ohne diesen Schalter idealerweise keine Erhöhung von Schaltverlusten ergibt.

Nachdem der Entlastungskondensator bei geöffnetem Eingangsschalter über die Brückenschaltung und die zweite Diode vollständig entladen worden ist, liegt wieder eine Spannung von null zwischen den Brückeneingängen an, so dass eine Schaltentlastung der Brückenschalter in der zuvor bereits beschriebenen Form erfolgen kann.

In einer Ausführungsform des erfindungsgemäßen Wechselrichters ist der zweite Brückeneingang direkt mit dem zweiten DC-Eingang verbunden. Dabei kann der Eingangsschalter eine antiparallele Diode aufweisen, die beispielsweise eine Bodydiode eines Leistungshalbleiterschalters sein kann.

In einer anderen Ausführungsform ist der zweite Brückeneingang über einen weiteren aktiv ansteuerbaren Eingangsschalter mit dem zweiten DC-Eingang verbunden. Dabei können der Eingangsschalter und der weitere Eingangsschalter eine antiparallele Diode aufweisen.

Vorteilhaft ist bei der Ausführungsform, bei der der zweite Brückeneingang über einen weiteren aktiv ansteuerbaren Eingangsschalter mit dem zweiten DC-Eingang verbunden ist, ein weiterer Entlastungskondensator vorhanden, der den zweiten Brückeneingang mit einem zweiten Verbindungspunkt verbindet, wobei eine Reihenschaltung einer dritten Diode und einer zweiten Induktivität den zweiten Verbindungspunkt mit dem Mittelabgriff des geteilten Gleichspannungszwischenkreises verbindet. Die dritte Diode ist dabei derart gepolt, dass der weitere Entlastungskondensator beim Einschalten des weiteren Eingangsschalters aufgeladen wird. Ferner verbindet bei dieser Ausführungsform eine vierte Diode den zweiten Verbindungspunkt mit dem ersten DC-Eingang, wobei die vierte Diode derart gepolt ist, dass der weitere Entlastungskondensator beim Ausschalten des weiteren Eingangsschalters entladen wird. Die zweite Diode ist bei dieser Ausführungsform des erfindungsgemäßen Wechselrichters an den zweiten DC-Eingang angeschlossen.

Bei der zuvor beschriebenen Ausführungsform mit dem weiteren Entlastungskondensator liegt ein symmetrischer Aufbau vor, sowohl was die aktiv ansteuerbaren Eingangsschalter betrifft, als auch was die zur Entlastung dienenden Schaltungskomponenten betrifft. Dadurch wird insbesondere eine ungleichmäßige Entladung der Hälften des geteilten Gleichspannungszwischenkreises vermieden. Weitere Vorteile ergeben sich insbesondere auch bei einer symmetrischen Taktung der Brückenschalter. Diese Vorteile werden allerdings mit einem erhöhten Aufwand an Schaltungskomponenten erkauft.

Bei einer blindleistungsfähigen Ausführungsform des erfindungsgemäßen Wechselrichters ist antiparallel zu der zweiten Diode ein erster aktiv ansteuerbarer Hilfsschalter angeordnet und der erste Verbindungspunkt über eine dritte Induktivität mit einem dritten Verbindungspunkt verbunden. Zwischen dem dritten Verbindungspunkt und dem zweiten Brückeneingang ist eine fünfte Diode angeschlossen, die mit einem gleichen Elektrodentyp mit dem zweiten Brückeneingang verbunden ist wie die zweite Diode. Ferner ist zwischen dem dritten Verbindungspunkt und dem ersten Brückeneingang ein zweiter aktiv ansteuerbarer Hilfsschalter angeschlossen, dem eine sechste Diode antiparallel geschaltet ist, die mit einem entgegengesetzten Elektrodentyp mit dem dritten Verbindungspunkt verbunden ist wie die fünfte Diode. Bei der blindleistungsfähigen Ausführungsform des erfindungsgemäßen Wechselrichters ist die zweite Diode an den zweiten Brückeneingang angeschlossen. Die Verbindung zwischen dem zweiten Brückeneingang mit dem zweiten DC-Eingang kann dabei direkt oder über den weiteren aktiv ansteuerbaren Eingangsschalter ausgeführt sein. In jedem Fall sind aber bei den Eingangsschaltern antiparallele Dioden vorzusehen.

Bei einer Phasenverschiebung zwischen Spannung und Strom an den AC-Ausgängen der Brückenschaltung wird der Entlastungskondensator bei geöffneten Eingangsschaltern nicht mehr vollständig über die Brückenschaltung und die zweite Diode entladen. Daher wird dann durch Schließen der Hilfsschalter ein Kurzschluss zwischen den Brückeneingängen realisiert, über den der Entlastungskondensator in Verbindung mit der dritten Induktivität weiter entladen wird. Währenddessen weiterhin fließende Ströme an den Brückeneingängen werden über die als Freilaufdioden wirkende fünfte und sechste Diode geführt. Im Fall eines negativen Stroms an den Brückeneingängen fließt dieser bei geöffneten Eingangsschaltern über die antiparallelen Dioden der Eingangsschalter in den zwischen den DC-Eingängen angeschlossenen Gleichspannungszwischenkreis. Wenn der Entlastungskondensator vollständig entladen ist, liegt zwischen den Brückeneingängen wieder eine Spannung von null an, so dass ein verlustarmes Schalten der Brückenschalter möglich ist und auch die Hilfsschalter wieder geöffnet werden können.

Bei der blindleistungsfähigen Ausführungsform des erfindungsgemäßen Wechselrichters kann zwischen dem ersten Verbindungspunkt und dem ersten Brückeneingang eine siebte Diode angeschlossen sein, die mit einem entgegengesetzten Elektrodentyp mit dem ersten Verbindungspunkt verbunden ist wie die zweite Diode. Hierdurch entsteht ein zusätzlicher Freilaufpfad.

Bei einem erfindungsgemäßen Wechselrichter kann die Brückenschaltung zwei Halbbrücken umfassen, die jeweils zwischen dem ersten Brückeneingang und dem zweiten Brückeneingang angeschlossen sind. Eine solche Parallelschaltung von zwei Halbbrücken ist unter dem Begriff "H-Brücke" bekannt. Falls diesen zwei Halbrücken eine weitere Halbbrücke parallel geschaltet ist, spricht man von einer sogenannten "B6-Brücke". Grundsätzlich können den zwei Halbbrücken beliebig viele weitere Brückenzweige parallel geschaltet sein.

Der erfindungsgemäße Wechselrichter kann ein transformatorloser Wechselrichter sein.

In einer Ausführungsform des erfindungsgemäßen Wechselrichters weist die Brückenschaltung zwei AC-Ausgänge auf, die zum Anschluss an ein einphasiges Wechselstromnetz vorgesehen sind.

In einer anderen Ausführungsform des erfindungsgemäßen Wechselrichters weist die Brückenschaltung drei AC-Ausgänge auf, die zum Anschluss an ein dreiphasiges Wechselstromnetz vorgesehen sind.

Ein erfindungsgemäßer Wechselrichter kann auch zwei oder mehr Brückenschaltungen aufweisen, deren Brückeneingänge parallel mit den DC-Eingängen verbunden sind. Dabei kann ein gemeinsamer aktiv ansteuerbarer Eingangsschalter für alle Brückenschaltungen vorgesehen sein, es kann aber auch für jeweils einzelne oder sogar für jede einzelne Brückenschaltung ein eigener aktiv ansteuerbarer Eingangsschalter mit einem eigenen Entlastungskondensator vorgesehen sein und dabei dann jeweils gemeinsame oder einzelne erste und zweite Dioden sowie erste Induktivitäten.

Eine erfindungsgemäße Photovoltaikanlage umfasst einen erfindungsgemäßen Wechselrichter gemäß einer der zuvor beschriebenen Ausführungsformen und einen Photovoltaikgenerator, wobei der Photovoltaikgenerator zwischen dem ersten DC-Eingang und dem zweiten DC-Eingang angeschlossen ist und die AC-Ausgänge an ein Wechselstromnetz angeschlossen sind.

Im Folgenden wird die Erfindung anhand von Figuren näher erläutert. Die Figuren dienen hierbei der Veranschaulichung von Ausführungsformen der Erfindung, beschränken die Erfindung aber nicht auf die gezeigten Merkmale.
Fig. 1 zeigt eine erste Ausführungsform eines erfindungsgemäßen Wechselrichters,
Fig. 2 zeigt eine zweite Ausführungsform eines erfindungsgemäßen Wechselrichters,
Fig. 3 zeigt eine blindleistungsfähige Ausführungsform eines erfindungsgemäßen Wechselrichters,
Fig. 4 zeigt eine weitere blindleistungsfähige Ausführungsform des erfindungsgemäßen Wechselrichters und
Fig. 5 zeigt eine erfindungsgemäße Photovoltaikanlage.

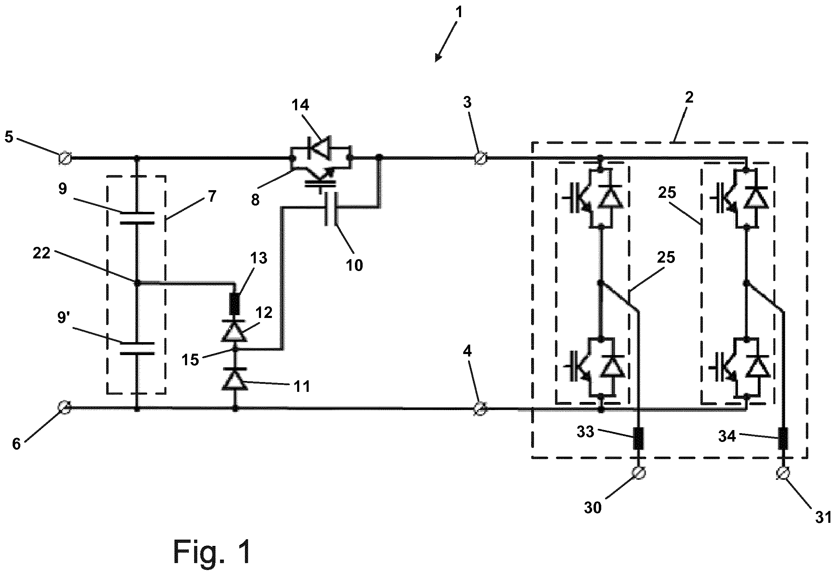

Fig. 1 zeigt eine Schaltungsanordnung für einen erfindungsgemäßen Wechselrichter 1 mit einer Brückenschaltung 2, die aus einer Parallelschaltung zweier Halbbrücken 25 in Form einer sogenannten H-Brücke gebildet wird. Die Halbrücken 25 sind in bekannter Weise als eine Reihenschaltung jeweils zweier Leistungshalbleiterschalter mit antiparallel geschalteten Dioden als Freilaufdioden ausgebildet. In den Leitungen zu den AC-Ausgängen 30, 31 sind Netzdrosseln 33, 34 vorgesehen. Die Brückenschaltung 2 weist einen ersten Brückeneingang 3 und einen zweiten Brückeneingang 4 auf, wobei der erste Brückeneingang 3 über einen aktiv ansteuerbaren Eingangsschalter 8, der hier als Leistungshalbleiterschalter mit einer antiparallelen Diode 14 ausgeführt ist, mit einem ersten DC-Eingang 5 verbunden ist und der zweite Brückeneingang 4 direkt mit einem zweiten DC-Eingang 6 verbunden ist. Zwischen dem ersten Brückeneingang 3 und dem zweiten DC-Eingang 6 ist eine Reihenschaltung eines Entlastungskondensators 10 und einer zweiten Diode 11 angeordnet. Die zweite Diode 11 ist hier aufgrund der direkten Verbindung zwischen dem zweiten DC-Eingang 6 und dem zweiten Brückeneingang 4 gleichzeitig auch mit dem zweiten Brückeneingang 4 verbunden. Ein erster Verbindungspunkt 15 zwischen der zweiten Diode 11 und dem Entlastungskondensator 10 ist über eine Reihenschaltung einer ersten Diode 12 und einer ersten Induktivität 13 mit einem Mittelabgriff 22 eines geteilten Gleichspannungszwischenkreises 7 verbunden. Der geteilte Gleichspannungszwischenkreis 7 wird aus einer Reihenschaltung zweier Kondensatoren 9, 9' gebildet und ist zwischen dem ersten DC-Eingang 5 und dem zweiten DC-Eingang 6 angeschlossen.

Durch Schließen und Öffnen des Eingangsschalters 8 wird der Entlastungskondensator 10 geladen und entladen. Dazu ist die zweite Diode 12 derart gepolt, dass der Entlastungskondensator 10 bei geöffnetem Eingangsschalter 8 über die Brückenschaltung 2 entladen wird und die erste Diode 11 derart gepolt, dass der Entlastungskondensator 10 bei geschlossenem Eingangsschalter 8 aus einem Kondensator 9 des geteilten Gleichspannungszwischenkreises 7 geladen wird. Dieses Aufladen erfolgt in Form einer halben Resonanzschwingung des aus der ersten Induktivität 13 und dem Entlastungskondensator 10 gebildeten Schwingkreises, wobei eine Fortsetzung der Resonanzschwingung, und damit ein anschließendes Entladen, durch die erste Diode 11 verhindert wird. An dem Kondensator 9 fällt die Hälfte der an dem Gleichspannungszwischenkreis 7 anliegenden Spannung ab. Der Entlastungskondensator 10 wird daher durch die Resonanzschwingung auf die gleiche Spannung aufgeladen, wie der Gleichspannungszwischenkreis 7. Zum Ausgleich einer asymmetrischen Energieentnahme aus den Hälften des geteilten Gleichspannungszwischenkreises 7 kann eine hier nicht dargestellte Ausgleichsschaltung vorgesehen sein.

Bei entladenem Entlastungskondensator 10 liegt zwischen den Brückeneingängen 3, 4 eine Spannung von null an. Dadurch ist ein spannungsfreies und damit verlustreduziertes Schalten von Brückenschaltern innerhalb der Brückenschaltung 2 möglich. Bei geladenem Entlastungskondensator 10 liegt über dem Eingangsschalter 8 eine Spannung von null an. In dem Fall ist ein spannungsfreies und damit verlustreduziertes Schalten des aktiv ansteuerbaren Eingangsschalters 8 möglich.

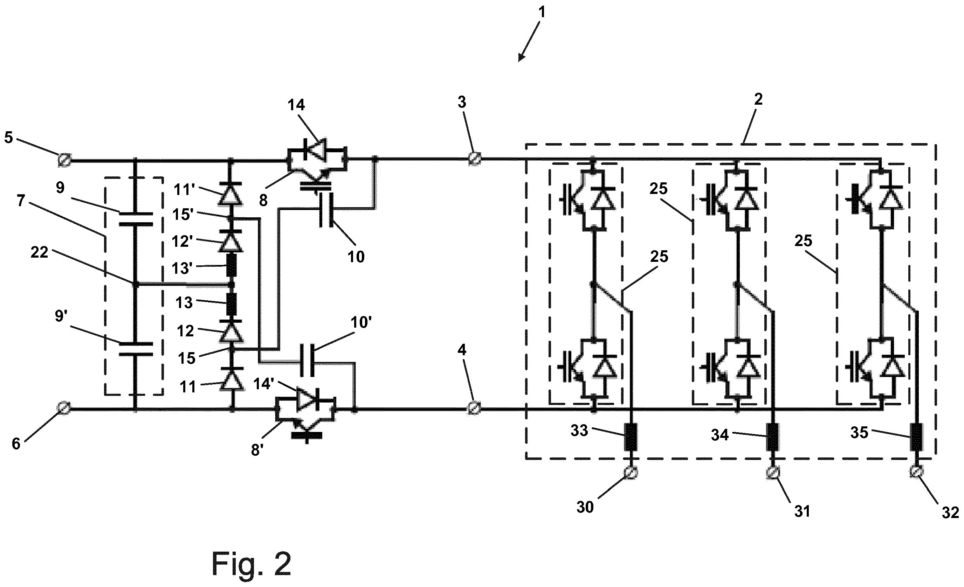

In Fig. 2 ist eine Ausführungsform eines erfindungsgemäßen Wechselrichters 1 dargestellt, bei dem gegenüber der Ausführungsform aus Fig. 1 der zweite Brückeneingang 4 über einen weiteren aktiv ansteuerbaren Eingangsschalter 8', der hier als Leistungshalbleiterschalter mit einer antiparallelen Diode 14' ausgeführt ist, mit dem zweiten DC-Eingang 6 verbunden ist. Weiterhin ist gegenüber der Ausführungsform aus Fig. 1 ein weiterer Entlastungskondensator 10' vorhanden, der in einer Reihenschaltung mit einer vierten Diode 11' zwischen dem zweiten Brückeneingang 4 und dem ersten DC-Eingang 5 angeordnet ist. Ein zweiter Verbindungspunkt 15' zwischen der vierten Diode 11' und dem weiteren Entlastungskondensator 10' ist über eine Reihenschaltung einer dritten Diode 12' und einer zweiten Induktivität 13' mit dem Mittelabgriff 22 des geteilten Gleichspannungszwischenkreises 7 verbunden. Die vierte Diode 11' ist derart gepolt, dass der weitere Entlastungskondensator 10' beim Öffnen des weiteren Eingangsschalters 8' über die Brückenschaltung 2 entladen wird und die dritte Diode 12' ist derart gepolt, dass der weitere Entlastungskondensator 10' bei geschlossenem weiterem Eingangsschalter 8' aus einem Kondensator 9' des geteilten Gleichspannungszwischenkreises 7 in Form einer halben Resonanzschwingung geladen wird.

Die erste Induktivität 13 und die zweite Induktivität 13' können auch durch eine gemeinsame Induktivität gebildet sein, die dann zwischen dem Mittelabgriff 22 und der ersten Diode 12 sowie der dritten Diode 12' angeordnet ist.

Bei der Ausführungsform des erfindungsgemäßen Wechselrichters 1 in Fig. 2 liegt gegenüber der Ausführungsform in Fig. 1 ein symmetrischer Aufbau vor. Dabei ergibt sich insbesondere der Vorteil, dass der Entlastungskondensator 10 aus einem Kondensator 9 des geteilten Gleichspannungszwischenkreises 7 geladen wird und der weitere Entlastungskondensator 10' aus dem jeweils anderen Kondensator 9' des geteilten Gleichspannungszwischenkreises 7, das heißt, es erfolgt eine gleichmäßige Belastung beider Hälften des geteilten Gleichspannungszwischenkreises.

Die Brückenschaltung 2 des Wechselrichters 1 wird hier aus einer Parallelschaltung dreier Halbbrücken 25 in Form einer sogenannten B6-Brücke gebildet, wobei in allen Leitungen zu den AC-Ausgängen 30, 31, 32 Netzdrosseln 33, 34, 35 vorgesehen sind. Grundsätzlich kann bei dieser, wie bei anderen Ausführungsformen eines erfindungsgemäßen Wechselrichters, die Brückenschaltung auch eine andere Form auf weisen.

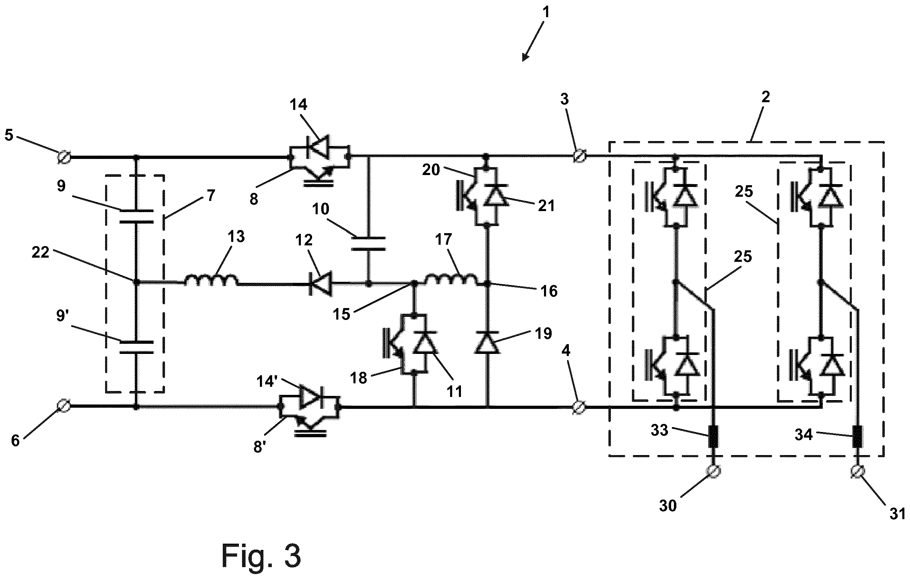

Bei einer blindleistungsfähigen Ausführungsform eines erfindungsgemäßen Wechselrichters 1 in Fig. 3 ist antiparallel zu der zweiten Diode 11 ein erster aktiv ansteuerbarer Hilfsschalter 18 angeordnet. Der erste Verbindungspunkt 15 ist über eine dritte Induktivität 17 mit einem dritten Verbindungspunkt 16 verbunden, an welchem eine fünfte Diode 19 und ein zweiter aktiv ansteuerbarer Hilfsschalter 20, dem eine sechste Diode 21 antiparallel geschaltet ist, verbunden sind, die in Reihe geschaltet zwischen dem zweiten Brückeneingang 4 und dem ersten Brückeneingang 5 angeordnet sind. Die fünfte Diode 19 und die sechste Diode 21 sind derart gepolt, dass ein Stromfluss von dem zweiten Brückeneingang 4 zu dem ersten Brückeneingang 5 möglich ist.

Mit den Hilfsschaltern 18, 20 kann ein Kurzschluss zwischen den Brückeneingängen 3, 4 realisiert werden, um in Verbindung mit der dritten Induktivität 17 den Entlastungskondensator 10 auch im Fall einer Phasenverschiebung zwischen Spannung und Strom an den AC-Ausgängen 30, 31 der Brückenschaltung 2 vollständig zu entladen. Die fünfte Diode 19 und die sechste Diode 21 bilden einen Freilaufpfad für währenddessen weiterhin fließende Ströme an den Brückeneingängen 3, 4.

In Fig. 3 ist exemplarisch der zweite Brückeneingang 4 über einen weiteren aktiv ansteuerbaren Eingangsschalter 8' mit dem zweiten DC-Eingang 6 verbunden. Dieser Schalter kann für andere Ausführungsformen eines blindleistungsfähigen erfindungsgemäßen Wechselrichters auch entfallen.

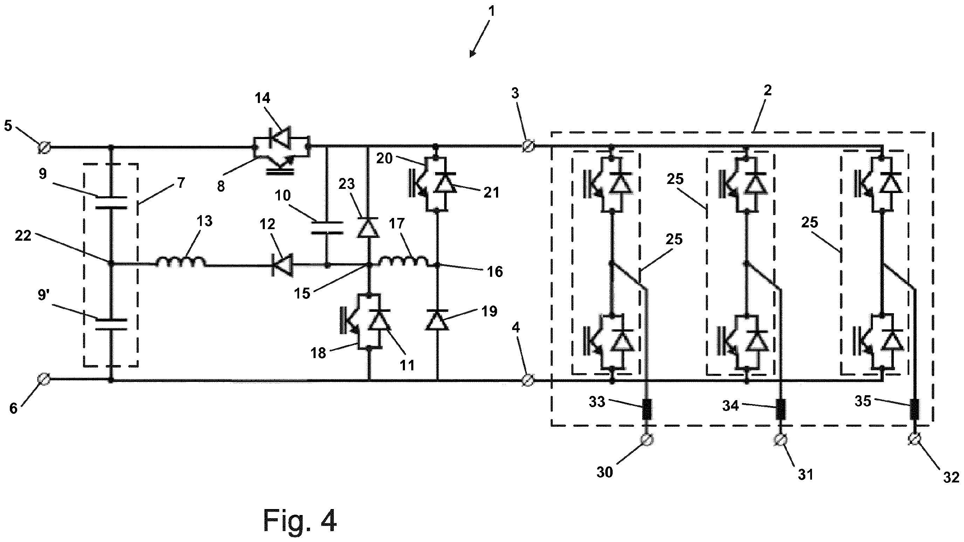

Bei der Ausführungsform eines blindleistungsfähigen erfindungsgemäßen Wechselrichters 1 in Fig. 4 ist zwischen dem ersten Verbindungspunkt 15 und dem ersten Brückeneingang 3 eine siebte Diode 23 angeschlossen, die derart gepolt ist, dass ein Stromfluss von dem zweiten Brückeneingang 4 zu dem ersten Brückeneingang 3 möglich ist. Damit bilden die zweite Diode 11 und die siebte Diode 23 einen weiteren Freilaufpfad.

In Fig. 4 ist weiterhin exemplarisch der zweite Brückeneingang 4 direkt mit dem zweiten DC-Eingang 6 verbunden. Für weitere Ausführungsformen eines blindleistungsfähigen erfindungsgemäßen Wechselrichters kann in dieser Verbindung auch ein weiterer aktiv ansteuerbarer Eingangsschalter angeordnet sein.

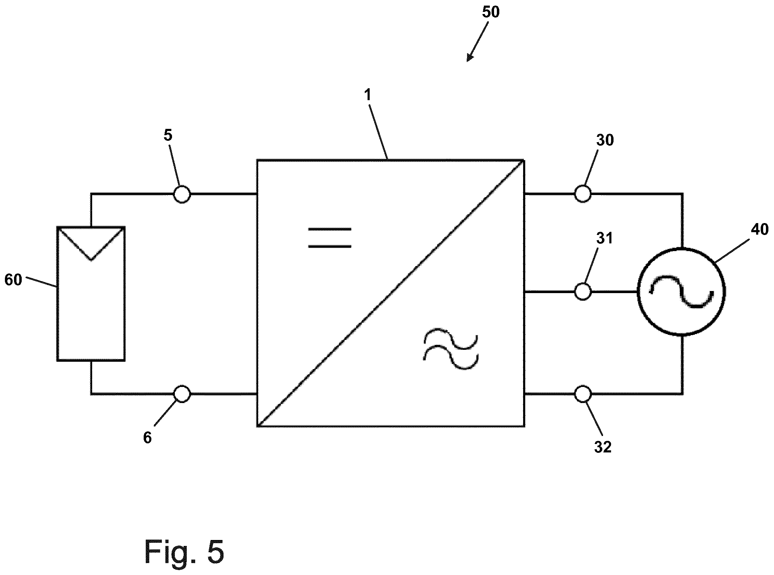

In Fig. 5 ist die Verschaltung eines erfindungsgemäßen Wechselrichters 1 zu einer erfindungsgemäßen Photovoltaikanlage 50 dargestellt. Hierzu ist an den Brückeneingängen 5, 6 ein Photovoltaikgenerator 60 angeschlossen und an die AC-Ausgänge 30, 31, 32 ein Wechselstromnetz 40. Bei der Ausführungsform in Fig. 5 ist dies ein dreiphasiges Netz, es kann jedoch, je nach Ausführungsform des Wechselrichters jedes beliebige andere Wechselstromnetz sein. Insbesondere kann auch, je nach Ausführungsform, ein Anschluss an einen Neutralleiter vorgesehen sein, der insbesondere mit dem Mittelabgriff 22 des Zwischenkreises 7 verbunden sein kann.

Die Erfindung ist nicht auf die explizit gezeigten Ausführungsformen beschränkt, sondern kann in vielfacher Art und Weise abgewandelt, insbesondere mit anderen gezeigten oder dem Fachmann bekannten Ausführungsformen kombiniert werden.

### Bezugszeichenliste

- 1: Wechselrichter
- 2: Brückenschaltung
- 3, 4: Brückeneingang
- 5, 6: DC-Eingang
- 7: Gleichspannungszwischenkreis
- 8, 8': Eingangsschalter
- 9, 9': Kondensator
- 10, 10': Entlastungskondensator
- 11, 11', 12, 12': Diode
- 13, 13': Induktivität
- 14, 14': Diode
- 15, 15', 16: Verbindungspunkt
- 17: Induktivität
- 18: Hilfsschalter
- 19: Diode
- 20: Hilfsschalter
- 21: Diode
- 22: Mittelabgriff
- 23: Diode
- 25: Halbbrücke
- 30,31,32: AC-Ausgang
- 33, 34, 35: Netzdrossel
- 40: Wechselstromnetz
- 50: Photovoltaikanlage
- 60: Photovoltaikgenerator

## Patentansprüche

1. Wechselrichter (1), umfassend eine Brückenschaltung (2) mit einem ersten Brückeneingang (3) und einem zweiten Brückeneingang (4) und ferner umfassend einen ersten DC-Eingang (5) und einen zweiten DC-Eingang (6),
**dadurch gekennzeichnet, dass** der Wechselrichter einen aktiv ansteuerbaren Eingangsschalter (8), einen Entlastungskondensator (10), eine Reihenschaltung einer ersten Diode (12) und einer ersten Induktivität (13), einen geteilten Gleichspannungszwischenkreis (7) und eine zweite Diode (11) umfasst,
dass der erste Brückeneingang (3) über den aktiv ansteuerbaren Eingangsschalter (8) mit dem ersten DC-Eingang (5) verbunden ist,
dass der Entlastungskondensator (10) den ersten Brückeneingang (3) mit einem ersten Verbindungspunkt (15) verbindet,
dass die Reihenschaltung der ersten Diode (12) und der ersten Induktivität (13) den ersten Verbindungspunkt (15) mit dem Mittelabgriff (22) des zwischen dem ersten DC-Eingang (5) und dem zweiten DC-Eingang (6) angeordneten geteilten Gleichspannungszwischenkreises (7) verbindet, wobei die erste Diode (12) derart gepolt ist, dass der Entlastungskondensator (10) beim Einschalten des Eingangsschalters (8) aufgeladen wird,
und dass die zweite Diode (11) den ersten Verbindungspunkt (15) mit dem zweiten DC-Eingang (6) oder mit dem zweiten Brückeneingang (4) verbindet, wobei die zweite Diode (11) derart gepolt ist, dass der Entlastungskondensator (10) beim Ausschalten des Eingangsschalters (8) entladen wird.

2. Wechselrichter nach Anspruch 1, wobei der zweite Brückeneingang (4) direkt mit dem zweiten DC-Eingang (6) verbunden ist.

3. Wechselrichter nach Anspruch 1, wobei der Wechselrichter einen weiteren aktiv ansteuerbaren Eingangsschalter (8') aufweist und der zweite Brückeneingang (4) über den weiteren aktiv ansteuerbaren Eingangsschalter (8') mit dem zweiten DC-Eingang (6) verbunden ist.

4. Wechselrichter (1) nach Anspruch 2, wobei der Eingangsschalter (8) eine antiparallele Diode (14) aufweist.

5. Wechselrichter (1) nach Anspruch 3, wobei der Eingangsschalter (8) und der weitere Eingangsschalter (8') eine antiparallele Diode (14,14') aufweisen.

6. Wechselrichter (1) nach Anspruch 3 oder 5, wobei der Wechselrichter einen weiteren Entlastungskondensator (10'), eine Reihenschaltung einer dritten Diode (12') und einer zweiten Induktivität (13') und eine vierte Diode (11') aufweist, wobei die zweite Diode (11) an den zweiten DC-Eingang (6) angeschlossen ist, wobei der weitere Entlastungskondensator (10') den zweiten Brückeneingang (4) mit einem zweiten Verbindungspunkt (15') verbindet, wobei die Reihenschaltung der dritten Diode (12') und der zweiten Induktivität (13') den zweiten Verbindungspunkt (15') mit dem Mittelabgriff (22) des geteilten Gleichspannungszwischenkreises (7) verbindet und die dritte Diode (12') derart gepolt ist, dass der weitere Entlastungskondensator (10') beim Einschalten des weiteren Eingangsschalters (8') aufgeladen wird, und wobei die vierte Diode (11') den zweiten Verbindungspunkt (15') mit dem ersten DC-Eingang (5) verbindet und die vierte Diode (11') derart gepolt ist, dass der weitere Entlastungskondensator (10') beim Ausschalten des weiteren Eingangsschalters (8') entladen wird.

7. Wechselrichter (1) nach Anspruch 4 oder 5, wobei der Wechselrichter einen ersten aktiv ansteuerbaren Hilfsschalter (18), eine dritte Induktivität (17), eine fünfte Diode (19), einen zweiten aktiv ansteuerbaren Hilfsschalter (20) und eine sechste Diode (21) aufweist, wobei die zweite Diode (11) an den zweiten Brückeneingang (4) angeschlossen ist, und wobei der erste aktiv ansteuerbare Hilfsschalter (18) antiparallel zu der zweiten Diode (11) angeordnet ist und der erste Verbindungspunkt (15) über die dritte Induktivität (17) mit einem dritten Verbindungspunkt (16) verbunden ist, und wobei die fünfte Diode (19) zwischen dem dritten Verbindungspunkt (16) und dem zweiten Brückeneingang (4) angeschlossen ist und mit einem gleichen Elektrodentyp mit dem zweiten Brückeneingang (4) verbunden ist wie die zweite Diode (11), und zwischen dem dritten Verbindungspunkt (16) und dem ersten Brückeneingang (3) der zweite aktiv ansteuerbare Hilfsschalter (20) angeschlossen ist, dem die sechste Diode (21) antiparallel geschaltet ist, die mit einem entgegengesetzten Elektrodentyp mit dem dritten Verbindungspunkt (16) verbunden ist wie die fünfte Diode (19).

8. Wechselrichter (1) nach Anspruch 7, wobei der Wechselrichter eine siebte Diode (23) aufweist, die zwischen dem ersten Verbindungspunkt (15) und dem ersten Brückeneingang (3) angeschlossen ist und mit einem entgegengesetzten Elektrodentyp mit dem ersten Verbindungspunkt (15) verbunden ist wie die zweite Diode (11).

9. Wechselrichter (1) nach einem der Ansprüche 1 bis 8, wobei die Brückenschaltung (2) zwei Halbbrücken (25) umfasst, die jeweils zwischen dem ersten Brückeneingang (3) und dem zweiten Brückeneingang (4) angeschlossen sind.

10. Wechselrichter (1) nach einem der Ansprüche 1 bis 9, wobei der Wechselrichter (1) ein transformatorloser Wechselrichter ist.

11. Wechselrichter (1) nach einem der Ansprüche 1 bis 10, wobei die Brückenschaltung (2) zwei AC-Ausgänge (30, 31) aufweist, die zum Anschluss an ein einphasiges Wechselstromnetz (40) vorgesehen sind.

12. Wechselrichter (1) nach einem der Ansprüche 1 bis 10, wobei die Brückenschaltung (2) drei AC-Ausgänge (30, 31, 32) aufweist, die zum Anschluss an ein dreiphasiges Wechselstromnetz (40) vorgesehen sind.

13. Photovoltaikanlage (50), umfassend einen Wechselrichter (1) nach einem der Ansprüche 11 oder 12 und einen Photovoltaikgenerator (60), wobei der Photovoltaikgenerator (60) zwischen dem ersten DC-Eingang (5) und dem zweiten DC-Eingang (6) angeschlossen ist.

## Claims

1. An inverter (1) comprising a bridge circuit (2) with a first bridge input (3) and a second bridge input (4) and further comprising a first DC input (5) and a second DC input (6), **characterized in that** the inverter comprises an actively controllable input switch (8), a snubber capacitor (10), a series circuit of a first diode (12) and a first inductor (13), a split DC intermediate circuit (7) and a second diode (11),
**in that** the first bridge input (3) is connected to the first DC input (5) via the actively controllable input switch (8),
**in that** the snubber capacitor (10) connects the first bridge input (3) to a first connection point (15),
**in that** the series circuit of the first diode (12) and the first inductor (13)connects the first connection point (15) to the center tap (22) of the split DC intermediate circuit (7) arranged between the first DC input (5) and the second DC input (6), the first diode (12) being polarized in such a way that the snubber capacitor (10) is charged when the input switch (8) is switched on,
and **in that** the second diode (11) connects the first connection point (15) to the second DC input (6) or to the second bridge input (4), the second diode (11) being polarized in such a way that the snubber capacitor (10) is discharged when the input switch (8) is switched off.

2. The inverter according to claim 1, wherein the second bridge input (4) is directly connected to the second DC input (6).

3. The inverter according to claim 1, wherein the inverter comprises a further actively controllable input switch (8') and the second bridge input (4) is connected to the second DC input (6) via the further actively controllable input switch (8').

4. The inverter (1) according to claim 2, wherein the input switch (8) comprises an antiparallel diode (14).

5. The inverter (1) according to claim 3, wherein the input switch (8) and the further input switch (8') comprise an antiparallel diode (14, 14').

6. The inverter (1) according to claim 3 or 5, wherein the inverter comprises a further snubber capacitor (10'), a series connection of a third diode (12') and a second inductance (13') and a fourth diode (11'), wherein the second diode (11) is connected to the second DC input (6), wherein the further snubber capacitor (10') connects the second bridge input (4) to a second connection point (15'), wherein the series connection of the third diode (12') and the second inductor (13') connects the second connection point (15') to the center tap (22) of the split DC intermediate circuit (7) and the third diode (12') is polarized such that the further snubber capacitor (10') is charged when the further input switch (8') is switched on, and wherein the fourth diode (11') connects the second connection point (15') to the first DC input (5), the fourth diode (11') being polarized in such a way that the further snubber capacitor (10') is discharged when the further input switch (8') is switched off.

7. The inverter (1) according to claim 4 or 5, wherein the inverter comprises a first actively controllable auxiliary switch (18), a third inductor (17), a fifth diode (19), a second actively controllable auxiliary switch (20), and a sixth diode (21), wherein the second diode (11) is connected to the second bridge input (4), and wherein the first actively controllable auxiliary switch (18) is arranged antiparallel to the second diode (11) and the first connection point (15) is connected to a third connection point (16) via the third inductor (17), and wherein the fifth diode (19) is connected between the third connection point (16) and the second bridge input (4) and is connected to the second bridge input (4) with the same electrode type as the second diode (11), and wherein the second actively controllable auxiliary switch (20) is connected between the third connection point (16) and the first bridge input (3), the sixth diode (21) being connected antiparallel to the second actively controllable auxiliary switch (20), and connected to the third connection point (16) by an electrode type opposite to the type of the fifth diode (19).

8. The inverter (1) according to claim 7, the inverter comprising a seventh diode (23) connected between the first connection point (15) and the first bridge input (3) and connected to the first connection point (15) by an electrode type opposite to the type of the second diode (11).

9. The inverter (1) according to any one of claims 1 to 8, wherein the bridge circuit (2) comprises two half bridges (25) each connected between the first bridge input (3) and the second bridge input (4).

10. The inverter (1) according to any one of claims 1 to 9, wherein the inverter (1) is a transformerless inverter.

11. The inverter (1) according to any one of claims 1 to 10, wherein the bridge circuit (2) comprises two AC outputs (30, 31) provided for connection to a single-phase AC network (40).

12. The inverter (1) according to any one of claims 1 to 10, wherein the bridge circuit (2) comprises three AC outputs (30, 31, 32) provided for connection to a three-phase AC network (40).

13. A photovoltaic system (50) comprising an inverter (1) according to any one of claims 11 or 12 and a photovoltaic generator (60), wherein the photovoltaic generator (60) is connected between the first DC input (5) and the second DC input (6).

## Revendications

1. Onduleur (1) comprenant un circuit en pont (2) avec une première entrée de pont (3) et une deuxième entrée de pont (4) et comprenant en outre une première entrée CC (5) et une deuxième entrée CC (6),
**caractérisé en ce que** l'onduleur comprend un commutateur d'entrée (8) pouvant être commandé activement, un condensateur de décharge (10), un circuit série constitué par une première diode (12) et une première inductance (13), un circuit intermédiaire CC divisé (7) et une deuxième diode (11),
**en ce que** la première entrée de pont (3) est reliée à la première entrée CC (5) par l'intermédiaire du commutateur d'entrée (8) pouvant être commandé activement,
**en ce que** le condensateur de décharge (10) relie la première entrée de pont (3) à un premier point de connexion (15),
**en ce que** le circuit en série constitué par la première diode (12) et la première inductance (13) relie le premier point de connexion (15) à la prise centrale (22) du circuit intermédiaire CC divisé (7) disposé entre la première entrée CC (5) et la deuxième entrée CC (6), la première diode (12) étant polarisée de telle sorte que le condensateur de décharge (10) est chargé lorsque le commutateur d'entrée (8) est enclenché,
et **en ce que** la deuxième diode (11) relie le premier point de connexion (15) à la deuxième entrée CC (6) ou à la deuxième entrée de pont (4), la deuxième diode (11) étant polarisée de telle sorte que le condensateur de décharge (10) est déchargé lorsque le commutateur (8) est éteint.

2. Onduleur selon la revendication 1, la deuxième entrée de pont (4) étant directement reliée à la deuxième entrée CC (6).

3. Onduleur selon la revendication 1, dans lequel l'onduleur comporte un autre commutateur d'entrée (8') pouvant être commandé activement et la deuxième entrée de pont (4) est reliée à la deuxième entrée CC (6) par le commutateur d'entrée (8') pouvant être commandé activement.

4. Onduleur (1) selon la revendication 2, le commutateur d'entrée (8) comportant une diode antiparallèle (14).

5. Onduleur (1) selon la revendication 3, le commutateur d'entrée (8) et l'autre commutateur d'entrée (8') comportant une diode antiparallèle (14, 14').

6. Onduleur (1) selon la revendication 3 ou 5, dans lequel l'onduleur présente un autre condensateur de décharge (10'), un circuit en série d'une troisième diode (12') et d'une deuxième inductance (13') et une quatrième diode (11'), la deuxième diode (11) étant reliée à la deuxième entrée CC (6), l'autre condensateur de décharge (10') reliant la deuxième entrée de pont (4) à un deuxième point de connexion (15'), dans lequel le circuit en série de la troisième diode (12') et de la deuxième inductance (13') relie le deuxième point de connexion (15') à la prise centrale (22) du circuit intermédiaire CC divisé (7) et la troisième diode (12') est polarisée de telle sorte que l'autre condensateur de décharge (10') est chargé lorsque l'autre commutateur d'entrée (8') est enclenché, et la quatrième diode (11') reliant le deuxième point de connexion (15') à la première entrée CC (5) et la quatrième diode (11') étant polarisée de telle sorte que l'autre condensateur de décharge (10') est déchargé lorsque l'autre commutateur d'entrée (8') est éteint.

7. Onduleur (1) selon la revendication 4 ou 5, dans lequel l'onduleur présente un premier commutateur auxiliaire (18) pouvant être commandé activement, une troisième inductance (17), une cinquième diode (19), un deuxième commutateur auxiliaire (20) pouvant être commandé activement et une sixième diode (21), la deuxième diode (11) étant connectée à la deuxième entrée de pont (4), et le premier commutateur auxiliaire (18) pouvant être commandé activement étant disposé antiparallèlement à la deuxième diode (11) et le premier point de connexion (15) étant connecté à un troisième point de connexion (16) par le troisième inducteur (17), et dans lequel la cinquième diode (19) est connectée entre le troisième point de connexion (16) et la deuxième entrée de pont (4) et est connectée à la deuxième entrée de pont (4) avec le même type d'électrode que la deuxième diode (11), et entre le troisième point de connexion (16) et la première entrée de pont (3) est raccordé le deuxième commutateur auxiliaire (20) pouvant être commandé activement auquel la sixième diode (21) est raccordée en antiparallèle, qui est raccordé au troisième point de connexion (16) par une électrode de type opposé à la cinquième diode (19).

8. Onduleur (1) selon la revendication 7, dans lequel l'onduleur présente une septième diode (23) connectée entre le premier point de connexion (15) et la première entrée de pont (3) et connectée au premier point de connexion (15) par un type d'électrode opposé à la deuxième diode (11).

9. Onduleur (1) selon l'une quelconque des revendications 1 à 8, dans lequel le circuit en pont (2) comprend deux demi-ponts (25) reliés chacun entre la première entrée de pont (3) et la deuxième entrée de pont (4).

10. Onduleur (1) selon l'une quelconque des revendications 1 à 9, dans lequel l'onduleur (1) est un onduleur sans transformateur.

11. Onduleur (1) selon l'une quelconque des revendications 1 à 10, le circuit en pont (2) présentant deux sorties CA (30, 31) prévues pour le raccordement à un réseau CA monophasé (40).

12. Onduleur (1) selon l'une quelconque des revendications 1 à 10, le circuit en pont (2) présentant trois sorties CA (30, 31, 32) prévues pour le raccordement à un réseau CA triphasé (40).

13. Système photovoltaïque (50) comprenant un onduleur (1) selon l'une quelconque des revendications 11 ou 12 et un générateur photovoltaïque (60), dans lequel le générateur photovoltaïque (60) est connecté entre la première entrée CC (5) et la deuxième entrée CC (6).
